(19) Europäisches Patentamt
European Patent Office
Office européen des brevets

(11) EP 0 631 234 B1

(12) **EUROPÄISCHE PATENTSCHRIFT**

(45) Veröffentlichungstag und Bekanntmachung des Hinweises auf die Patenterteilung:
**13.01.1999  Patentblatt 1999/02**

(51) Int Cl.⁶: **G06F 11/14**, G06F 11/08

(21) Anmeldenummer: **94107446.0**

(22) Anmeldetag: **13.05.1994**

(54) **Verfahren zur Datensicherung**

Data protection method

Procédé de protection de données

(84) Benannte Vertragsstaaten:
**AT BE CH DE ES FR GB IT LI NL SE**

(30) Priorität: **03.06.1993  DE 4318440**

(43) Veröffentlichungstag der Anmeldung:
**28.12.1994   Patentblatt 1994/52**

(73) Patentinhaber: **ALCATEL ALSTHOM Compagnie Générale d'Electricité**
**75008 Paris (FR)**

(72) Erfinder:
- **Ackermann, Uwe**
  **D-71691 Freiberg (DE)**
- **Kopp, Dieter**
  **D-71282 Hemmingen (DE)**

- **Hörmann, Thomas**
  **D-71723 Grossbottwar (DE)**

(74) Vertreter: **Knecht, Ulrich Karl, Dipl.-Ing. et al**
**Alcatel Alsthom**
**Intellectual Property Department,**
**Postfach 30 09 29**
**70449 Stuttgart (DE)**

(56) Entgegenhaltungen:
**US-A- 4 782 468**

- **IBM TECHNICAL DISCLOSURE BULLETIN, Bd.33, Nr.11, April 1991, NEW YORK US Seiten 105 - 106 'Hardware reset with microcode warning period'**

**Beschreibung**

Die Erfindung betrifft ein Verfahren zur Datensicherung bei dynamischer Speicherverwaltung.

Eine Datensicherung ist notwendig, wenn eine Unterbrechung eines aktuell bearbeiteten Ablaufs oder Prozesses gewünscht wird oder zum Beispiel durch einen Stromausfall zwangsweise erfolgt.

Hierbei gibt es entweder externe Unterbrechungen oder interne Unterbrechungen. Diese Unterbrechungen werden auch asynchrone bzw. synchrone Unterbrechung genannt.

Beim Eintreffen eines Unterbrechungswunsches wird ein aktuell laufender Vorgang, z.B. ein Benutzerprozeß unterbrochen. Es muß aber sichergestellt werden, daß der unterbrochene Vorgang an der Unterbrechungsstelle später wieder fortgesetzt werden kann. Dies erfordert aber, daß der aktuelle Zustand zum Zeitpunkt der Unterbrechung abgespeichert wird und zur späteren Fortsetzung wieder geladen werden kann. Zur Abspeicherung des Unterbrechungszustandes gibt es ebenfalls eine Vielzahl von Varianten. So zum Beispiel die Ablage an fester Stelle in einem Arbeitsspeicher, an definierter Stelle bei dem unterbrochenen Vorgang oder in einem sogenannten Systemkeller (Handbuch der Informatik; "Betriebssysteme: Eine Einführung"; H.-J. Siegert, Band 4.1; 3. Auflagen; R. Oldenbourg Verlag München Wien 1991).

Eine Abspeicherung des Unterbrechungszustandes ist aber nur für den Fall möglich, daß genügend Zeit übrig bleibt. Bei einem plötzlichen Stromausfall kann möglicherweise die Zeit bis zum kompletten Systemausfall zu kurz sein und der aktuell bearbeitete Vorgang ist unwiederbringlich verloren. Desweiteren kann es bei einem Stromausfall aber auch vorkommen, daß zwar noch genügend Zeit verbleibt um systemrelevante Daten zwischenzuspeichern, aber der aktuell ablaufende Vorgang muß, damit genügend Zeit bleibt, sofort unterbrochen werden.

Wird z.B. bei einem Stromausfall und der darauffolgenden Datensicherung eine fehlerhafte Abspeicherung vorgenommen, kann die gesamte Datenverwaltung fehlerhaft werden.

In IBM TECHNICAL DISCLOSURE BULLETIN, Bd. 33, Nr. 11, April 1991, New York, US, Seiten 105-106, "Hardware Reset with Microcode Warning Period" wird ein Verfahren zur Durchführung eines Hardware-Resets beschrieben. Hierzu wird bei Auftreten eines ersten Signales (Reset Request) ein zweites Signal (Interrupt) erzeugt und einem Prozessor zugeleitet, um der Software, die gerade abgearbeitet wird, die Möglichkeit zu einer Sicherungsprozedur (clean-up operation) zu geben. Gleichzeitig wird ein Verzögerungsglied gestartet, das nach Ablauf einer vorgegebenen Zeitspanne dem Prozessor ein drittes Signal (Reset) zur endgültigen Durchführung des Hardware-Resets zuleitet. Damit ein gerade laufender kritischer Prozeß nicht unterbrochen wird, besteht die Möglichkeit, das Verzögerungsglied erneut zu starten, und damit die Zeitspanne bis zur endgültigen Durchführung des Hardware-Resets solange zu verlängern, bis der kritische Prozeß abgeschlossen ist. Bei einem Stromausfall läßt sich dieses Verfahren jedoch nicht einsetzen da sich die Zeitspanne zwischen Erkennen der Stromausfalles (erstes Signal) und endgültigem Zusammenbruch des Prozessorstromversorgung (drittes Signal) nicht beliebig verlängern läßt.

Der Erfindung liegt die Aufgabe zugrunde eine zuverlässige Datensicherung vorzunehmen.

Die Aufgabe wird erfindungsgemäß gelöst durch die Lehre des Patentanspruches 1.

Ein Vorteil der Erfindung liegt darin, daß bei einer Unterbrechung eines aktuell bearbeiteten Ablaufs oder Prozesses oder auch bei einem Stromausfall eine zuverlässige Datensicherung erfolgt und keine Daten verloren gehen.

Besonders bei einer dynamischen Speicherverwaltung wird mittels der Erfindung sichergestellt, daß die Speicherverwaltung nicht durch verfälschte Daten oder sogar bereits durch ein verfälschtes Bit fehlerhaft wird. Eine fehlerhafte Speicherverwaltung kann dazu führen, daß alle vorhandenen Daten nicht wieder aufrufbar im Speicher abgelegt sind. Dies wird durch die vorliegende Erfindung vorteilhaft vermieden.

Vorteilhafte Weiterentwicklungen der Erfindung sind den Unteransprüchen 2 und 4 zu entnehmen.

Nach Unteranspruch 2 wird eine Unterteilung der neuen Werte der aktuellen Daten vorgenommen. Die neuen Werte der aktuellen Daten werden in Datenpakete unterteilt. Ein Vorteil der Unterteilung in Datenpakete ist, daß selbst während kurzer Zeitspannen bis zur Unterbrechung des Prozesses oder bis zum Spannungsausfall eine gesicherte Änderung der aktuellen Daten erfolgen kann.

Nach Unteranspruch 4 wird eine vorteilhafte Verwendungsmöglichkeit erläutert. Hierbei ist es besonders vorteilhaft die Verfahren in einem Sprachspeichersystem mit Pool-Speicherverwaltung zu verwenden.

Ausführungsbeispiele werden anhand der folgenden Figuren erläutert. Folgende Figuren zeigen:

Fig. 1:     erstes Zustandsdiagramm der Signale gesehen über die Zeit,

Fig. 2:     zweites Zustandsdiagramm der Signale gesehen über die Zeit.

Bei einem Verfahren zur Datensicherung von Daten bei dynamischer Speicherverwaltung wird ein drohender Datenverlust von aktuell verarbeiteten Daten mittels eines ersten Signals PF angezeigt. Unter drohendem Datenverlust wird dabei zum Beispiel ein möglicher Spannungsausfall verstanden.

Ein möglicher Spannungsausfall wird dadurch festgestellt, daß die ursprünglich anliegende Spannung von 100 Prozent auf 100-x Prozent gesunken ist, wobei x eine natürliche Zahl aus dem Bereich $0<x<100$ ist. Der Wert von x bewegt sich erfahrungsgemäß zwischen 3 und 5 Prozent. Tritt dieser Fall auf, wird zur Ankündigung eines möglichen Datenverlustes das erste Signal PF erzeugt.

Das erste Signal PF löst ein zweites Signal PI aus. Dieses zweite Signal PI wird an einen Prozessor weitergegeben und unterbricht den Prozessor in der aktuellen Bearbeitung oder Änderung von Daten um wichtige systemrelevante Daten abzuspeichern.

Durch die Unterbrechung des Prozessors gehen die aktuell bearbeiteten Daten unwiederbringlich verloren.

Eine Zeitspanne $T_{PR}$ nach dem Auftreten des ersten Signales PF wird ein drittes Signal RESET erzeugt. Dieses dritte Signal RESET tritt auf, wenn die urspünglich anliegende Spannung von 100 Prozent auf 100-x' Prozent gesunken ist, wobei x' eine natürliche Zahl aus dem Bereich 0<x'<100 ist. Erfahrungsgemäß tritt das dritte Signal RESET auf, wenn der Wert der Summe 100-x-x' im Bereich um 90 Prozent liegt. Dies bedeutet, daß die Spannung um 10 Prozent abgefallen ist.

Das dritte Signal RESET bringt den Prozessor und auch das ganze ihn umgebende System in einen Ruhezustand. Nach dem dritten Signal RESET sind also keine Operationen oder Rechnerabläufe mehr möglich.

Tritt das dritte Signal RESET auf, gehen die unmittelbar vor der Unterbrechung durch das zweite Signal PI bearbeiteten Daten unwiederbringlich verloren. Tritt das dritte Signal RESET, infolge eines Anstiegs der anliegenden Spannung auf mehr als 100-x Prozent der ursprünglich anliegenden Spannung, nicht auf, so gibt das zweite Signal PI nach einer festzulegenden Zeit den Prozessor wieder frei und die durch PI unterbrochene Datenbearbeitung kann ohne Datenverlust weitergeführt werden.

Die Zeitspanne $T_{PR}$ zwischen erstem Signal PF und drittem Signal RESET ist abhängig von den verwendeten Systemkomponenten, so zum Beispiel vom Schaltnetzteil.

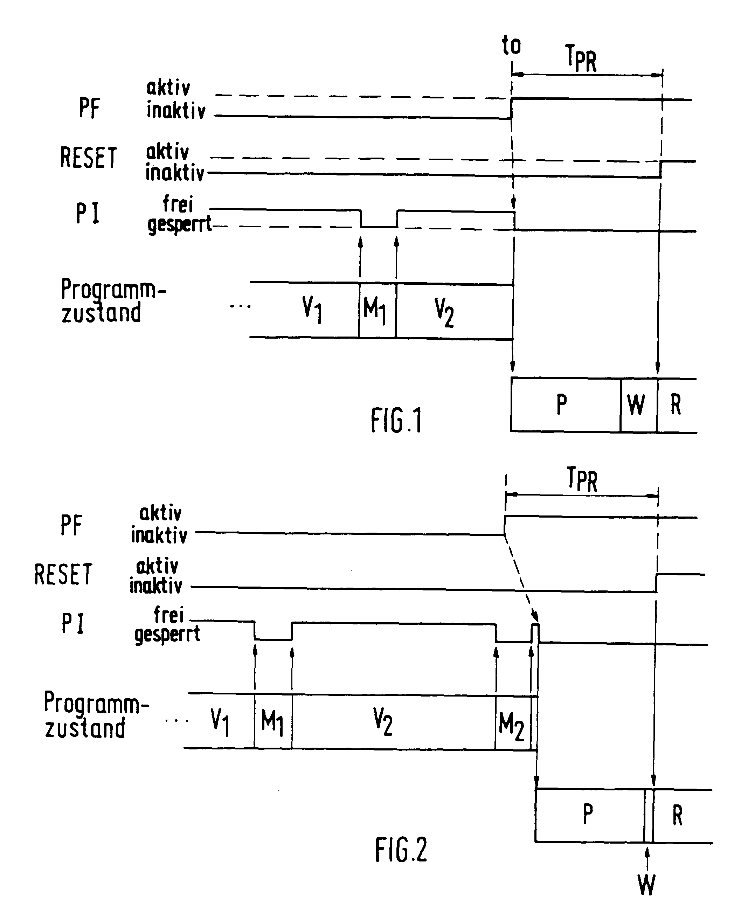

Im folgenden Teil wird anhand von Figur 1 ein Anwendungsbeispiel erläutert. Das erste Signal PF ist bis zu einem Zeitpunt to inaktiv. Zum Zeitpunkt to, dem Anfangszeitpunkt der Zeitspanne $T_{PR}$ an dem die Spannung auf den Wert 100-x Prozent abgefallen ist, wird das erste Signal PF aktiv. Zeitgleich dazu schaltet das zweite Signal PI den Prozessor aus dem Zustand frei auf gesperrt. Dies entspricht dem Schalten des Prozessors vom freien in einen gesperrten Zustand in dem nur bestimmte Prozesse ablaufen können, wie bereits zuvor erläutert.

Nach Ablauf der Zeitspanne $T_{PR}$ wird das dritte Signal RESET von dem inaktiven in den aktiven Zustand geschaltet. Dies bewirkt, wie bereits zuvor erläutert, daß der Prozessor und das ihn umgebende System in den Ruhezustand geschaltet werden.

Entsprechend der verstreichenden Zeit existieren verschiedene Programmzustände. Hierbei bedeuten folgende Abkürzungen:

$V_n$:   Zeitspanne vor einer Änderung der aktuellen Daten in denen die neuen Werte der aktuellen Daten vorbereitet werden und die Prüfsumme gebildet wird.

$M_n$:   Zeitspanne während der Änderung der aktuellen Daten und während der Übernahme der Prüfsumme.

P:   Zeitspanne nach dem Auftreten des ersten Signals PF, während wichtige systemrelevante Daten abgespeichert werden.

W:   Warteschleife in der auf das dritte Signal RESET gewartet wird.

R:   Ruhezustand des Prozessors und des ihn umgebenden Systems.

n:   1, 2, 3, ...

Der Programmzustand wechselt ständig vom Zustand $V_n$ in den Zustand $M_n$, für n = 1, 2, 3 ..., wobei sich n fortlaufend um 1 vergrößert.

Im Zustand $V_n$ werden die Daten vorbereitet und die Prüfsumme wird gebildet. Dabei kann die Prüfsumme mittels den aus den CCITT-Normen bekannten Verfahren gebildet werden.

Im Zustand $M_n$ werden die aktuellen Daten verändert, indem sie durch die vorbereiteten Daten ersetzt werden. Die Prüfsumme wird ebenfalls übernommen.

Würde während der Modifikation $M_n$ ein erstes Signal PF auftreten das zeitgleich ein zweites Signal PI auslöst und die zuvor beschriebenen Folgen auslöst, würden sämtliche Daten verloren gehen.

Zur Vermeidung dessen schaltet das zweite Signale PI ohne daß ein erstes Signal PF aufgetreten ist, den Prozessor vom Zustand frei auf gesperrt.

Das Schalten des Prozessors durch das zweite Signal PI aus dem freien in den gesperrten Zustand bedeutet, daß wenn der Prozessor im gesperrten Zustand ist, kein weiteres eine Unterbrechung ankündigendes Signal mehr erkannt werden kann.

Dadurch können alle Daten ohne Unterbrechung übernommen werden. Die berechnete Prüfsumme gibt an, ob die Daten vollständig und fehlerlos und ohne Unterbrechung übernommen wurden. Nach Beendigung der Übernahme, also nach Beendigung des Zustandes $M_n$ schaltet das zweite Signal PI wieder in den freien Zustand.

Ein neuer Programmzustand $V_n$ beginnt. Tritt das erste Signal PF während eines Programmzustandes $V_n$ auf, kann dieser Zustand sofort unterbrochen werden. Die im vorangegangenen Zustand $M_n$ übernommenen neuen Werte der aktuellen Daten, die anhand der Prüfsumme auf ihre Richtigkeit überprüft worden sind, genügen der Tatsache, daß Datensicherung gewährleistet sein muß.

Zum Zeitpunkt to beginnt die Zeitspanne P während die wichtigen systemrelevanten Daten abgespeichert werden müssen.

Diese Zeitspanne P muß kleiner als die Zeitspanne $T_{PR}$ sein. Die Differenz entspricht der Warteschleife W während der auf das dritte Signal RESET gewartet wird, die den Prozessor und das ihn umgebende System in den Ruhezustand versetzt.

Ist der Spannungsausfall beseitigt, kann der Prozessor und das ihn umgebende System wieder in Betrieb genommen werden.

Im folgenden Teil wird die Figur 2 erläutert.

Die für die Figur 1 gewählten Bezeichnungen für die Erläuterungen gelten ebenfalls für die Figur 2.

Im Unterschied dazu tritt das erste Signal PF während des Programmzustandes M auf.

Im Programmzustand M schaltet aber das zweite Signal PI den Prozessor vom Zustand frei auf gesperrt. Dies bewirkt aber, daß von dem ersten Signal PF nicht das zweite Signal PI ausgelöst werden kann, denn der Prozessor kann und darf im Programmzustand nicht unterbrochen werden. Nach dem Programmzustand M wird von dem zweiten Signal PI der Prozessor wieder freigegeben.

Da das erste Signal PF immer noch anliegt, schaltet sofort das zweite Signal PI den Prozessor in den gesperrten Zustand, um die systemrelevanten Daten zu sichern.

Dadurch steht aber nicht mehr die vollständige Zeitspanne $T_{PR}$ zur Verfügung.

Um in einem solchen Fall keine wichtigen systemrelevanten Daten durch das Eintreten des dritten Signals RESET zu verlieren, muß die Zeitspanne während der der Programmzustand M anliegt und die Zeitspanne während der der Programmzustand P anliegt kleiner als $T_{PR}$ sein.

Daraus folgt also:

$$T_{PR} < T(M) + T(P) \qquad (1)$$

Ist diese Bedingung (1) erfüllt, ist die Warteschleife W zwar verkürzt, exisitiert aber noch.

Für die beiden Beispiele gilt, daß durch Aufteilung der Daten in Datenpakete mit einer festgelegten, nicht zu überschreitenden Größe eine günstige Größe festgelegt werden kann die der Bedingung (1) genügt. Zur Verwaltung der einzelnen Datenpakete muß ein Zustandsregister geführt werden.

Ein weiteres Verfahren zur Datensicherung bei dynamischer Speicherverwaltung bereitet ebenfalls vor einer Änderung von aktuellen Daten neue Werte der aktuellen Daten vor (ohne Zeichnung). Die Prüfsumme wird ebenfalls ermittelt. Zu Beginn der Änderung der aktuellen Daten wird eine Markierung gesetzt, die anzeigt, daß eine Änderung vorgenommen wird.

Bei einem auftretenden Spannungsabfall oder bei einer anderen möglichen Unterbrechung durch die ein möglicher Datenverlust eintreten kann, wird zuerst die Änderung der aktuellen Daten zu einem definierten Abschluß gebracht. Unter definiertem Abschluß wird hierbei nicht verstanden, daß die Veränderung abgeschlossen wird. Vielmehr wird sie aber bis zu einem reproduzierbaren Abschluß geführt.

Eine besondere Verwendung finden die beschriebenen Verfahren bei Sprachspeichereinrichtungen mit Pool-Speicherverwaltung.

## Patentansprüche

1. Verfahren zur Datensicherung bei dynamischer Speicherverwaltung mittels eines Prozessors, wobei ein erstes Signal (PF), das einen drohenden Datenverlust anzeigt, auftreten kann und aufgrund des ersten Signales ein zweites Signal (PI) ausgelöst wird, das zum Unterbrechen des Prozessors in einer aktuellen Bearbeitung oder Änderung von Daten vorgesehen ist, mit folgenden Schritten:

   - in einem ersten Programmzustand, der vor einer Änderung von aktuellen Daten auftritt, werden neue Werte der aktuellen Daten vorbereitet und eine Prüfsumme ermittelt,

   - in einem zweiten Programmzustand, der während der Änderung der aktuellen Daten auftritt, wird das zweite Signal (PI) unterdrückt, und

   - nach der Änderung der aktuellen Daten wird das zweite Signal (PI) wieder freigegeben.

2. Verfahren nach Anspruch 1, bei dem die neuen Werte der aktuellen Daten in Datenpakete mit einer festgelegten, nicht zu überschreitenden Größe unterteilt sind, und die Änderung der aktuellen Daten datenpaketweise erfolgt und bei dem ein Zustandsregister geführt wird.

3. Verfahren nach Anspruch 1, bei dem zu Beginn der Änderung der aktuellen Daten dies mittels einer Markierung angezeigt wird.

4. Verwendung des Verfahrens nach einem der vorhergehenden Ansprüche zur Sprachspeicherung mit Pool-Speicherverwaltung.

## Claims

1. A method of protecting data in the case of dynamic memory management by means of a processor wherein a first signal (PF) indicating an imminent loss of data can occur and as a result of the first signal a second signal (PI) is triggered which serves to interrupt the processor in a current processing or modification of data, comprising the following steps:

- in a first program status which occurs prior to a modification of current data, new values of the current data are prepared and a check sum is calculated;
- in a second program status which occurs during the modification of the current data the second signal (PI) is suppressed and
- following the modification of the current data the second signal (PI) is released again.

2. A method according to Claim 1, wherein the new values of the current data are subdivided into data packets of a defined size which is not to be exceeded and the modification of the current data takes place data-packet-wise, and wherein a status register is maintained.

3. A method according to Claim 1, wherein at the start of the modification of the current data this is indicated by means of a marker.

4. The use of the method according to one of the preceding claims for speech storage with pool memory management.

**Revendications**

1. Procédé pour la protection des donnees dans une gestion dynamique de la mémoire au moyen d'un processeur, dans lequel un premier signal (PF) indiquant une perte de données imminente peut apparaître et en raison du premier signal, un deuxième signal (PT) est déclenché qui est prévu pour interrompre le processeur dans un traitement ou une modification de données actuel(le), comprenant les étapes suivantes :

- dans un premier état de programme qui apparaît avant une modification de données actuelles, de nouvelles valeurs des données actuelles sont préparées et une somme de contrôle est calculée,
- dans un deuxième état de programme qui apparaît pendant la modification des données actuelles le deuxième signal (PI) est supprimé, et
- après la modification des données actuelles, le deuxième signal (PI) est du nouveau libéré.

2. Procédé selon la revendication 1, dans lequel les nouvelles valeurs des données actuelles sont réparties sur des paquets de données d'une dimension fixe à ne pas dépasser, et la modification des données actuelles est effectuée par paquets de données, et dans lequel un registre ci'état est maintenu.

tenu.

3. Procédé selon la revendication 1, dans lequel au début de la modification des données actuelles ceci est indiqué au moyen d'un repère.

4. Application du procédé selon l'une quelconque des revendications précédentes pour la mémorisation de la parole avec une gestion groupée de la mémoire.

FIG.1

FIG.2